(19) Europäisches Patentamt
European Patent Office
Office européen des brevets

(11) EP 3 043 511 B1

(12) **FASCICULE DE BREVET EUROPEEN**

(45) Date de publication et mention de la délivrance du brevet:
**08.11.2017 Bulletin 2017/45**

(51) Int Cl.:
***H04L 9/32*** (2006.01)

(21) Numéro de dépôt: **16150447.7**

(22) Date de dépôt: **07.01.2016**

(54) **PROCÉDÉ D'IDENTIFICATION D'UNE ENTITÉ**

IDENTIFIZIERUNGSVERFAHREN EINER EINHEIT

METHOD FOR IDENTIFYING AN ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.01.2015 FR 1550156**

(43) Date de publication de la demande:
**13.07.2016 Bulletin 2016/28**

(73) Titulaire: **Morpho**
**92130 Issy-les-Moulineaux (FR)**

(72) Inventeur: **MOREL, Constance**
**92130 ISSY LES MOULINEAUX (FR)**

(74) Mandataire: **Regimbeau**
**20, rue de Chazelles**
**75847 Paris Cedex 17 (FR)**

(56) Documents cités:
**FR-A1- 2 984 559**

- **HONG CHEN ET AL: "Dental Biometrics: Alignment and Matching of Dental Radiographs", IEEE TRANSACTIONS ON PATTERN ANALYSIS AND MACHINE INTELLIGENCE, IEEE COMPUTER SOCIETY, USA, vol. 27, no. 8, 1 août 2005 (2005-08-01), pages 1319-1326, XP011135154, ISSN: 0162-8828, DOI: 10.1109/TPAMI.2005.157**
- **ZEKERIYA ERKIN ET AL: "Privacy-Preserving Face Recognition", 5 août 2009 (2009-08-05), PRIVACY ENHANCING TECHNOLOGIES, SPRINGER BERLIN HEIDELBERG, BERLIN, HEIDELBERG, PAGE(S) 235 - 253, XP019124874, ISBN: 978-3-642-03167-0 * sections 1, 4 and 7 ***
- **O. GOLDREICH ET AL: "How to play ANY mental game", PROCEEDINGS OF THE NINETEENTH ANNUAL ACM CONFERENCE ON THEORY OF COMPUTING , STOC '87, 1 janvier 1987 (1987-01-01), pages 218-229, XP055229996, New York, New York, USA DOI: 10.1145/28395.28420 ISBN: 978-0-89791-221-1**
- **Cayman Mitchell ET AL: "Radix Selection Algorithm for the leth Order Statistic", , 4 mai 2012 (2012-05-04), XP055229820, Extrait de l'Internet: URL:http://csis.pace.edu/~ctappert/srd2012 /a4.pdf [extrait le 2015-11-19]**

**Description**

DOMAINE TECHNIQUE GENERAL

La présente invention concerne le domaine de l'identification d'une entité, individus ou objets. Plus précisément, elle concerne un procédé d'identification sécurisée d'une entité.

ETAT DE LA TECHNIQUE

Afin de réaliser une identification d'une entité telle qu'un individu, une donnée biométrique de cet individu peut être utilisée afin d'identifier cette entité par rapport à une base de données biométriques, ou bien au moins afin de déterminer un nombre restreint d'entités candidates pour une telle identification parmi celles enregistrées dans une telle base de données. Pour cela, une donnée biométrique de l'entité à identifier est généralement acquise et comparée à des données biométriques de référence acquises préalablement et stockées dans une base de données. Une telle comparaison permet de déterminer si cette base de données contient une donnée biométrique de référence identique, à une erreur tolérable près, à celle de l'individu à identifier ou plusieurs données proches de celle de l'individu à identifier.

Une telle identification peut présenter un niveau élevé de sécurité grâce à l'unicité des données biométriques d'un individu comme son empreinte ADN ou le dessin de son iris. En contrepartie, de telles données peuvent être volumineuses, rendant alors très couteuse leur comparaison une à une à l'ensemble des données de référence d'une base de données pouvant en contenir des millions.

Afin de diminuer le coût d'une identification biométrique, des procédés existants, tel que celui divulgué dans WO2013/092916 « Biometric identification using filters and by secure multipart calculation », Morpho, A. Patey, proposent d'effectuer tout d'abord un filtrage des données biométriques acquises et de référence afin d'obtenir des données simplifiées, moins lourdes, dont la comparaison est moins couteuse. Une telle comparaison permet de déterminer rapidement les données de référence de la base de données les plus proches de la donnée biométrique acquise. Ces données de référence sont de bons candidats dans la recherche d'une donnée biométrique de référence correspondant à celle de l'individu. La donnée biométrique acquise, complète, peut ensuite être par exemple comparée uniquement à ces données de référence les plus proches afin de déterminer si la base de données contient une donnée biométrique de référence correspondant à l'individu et si celui-ci est identifié avec succès.

Un tel processus d'identification peut être mis en oeuvre par un échange d'informations entre un serveur de contrôle réalisant l'acquisition de la donnée biométrique de l'individu à identifier et un serveur de gestion ayant accès au contenu de la base de données biométriques de référence.

Afin d'éviter de compromettre la sécurité du mécanisme d'identification, il est nécessaire de maintenir la confidentialité des données de référence stockées dans une telle base de données. Un attaquant ne doit par exemple apprendre aucune information, par l'intermédiaire du serveur de contrôle, concernant ces données en tentant de s'identifier, même en le faisant à de multiples reprises. De même, afin de garantir l'anonymat et la vie privée des individus tentant de s'identifier, le serveur de gestion ne doit apprendre aucune information les concernant lors d'une tentative d'identification, pas même la donnée biométrique acquise par le serveur de contrôle.

Pour cela, des protocoles de calcul sécurisés peuvent être employés. De tels protocoles, tels que le protocole GMW (O. Goldreich, S. Micali, and A. Wigderson, "How to play any mental game or a completeness theorem for protocols with honest majority", Symposium on Theory of Computing (STOC), pages 218-229. ACM, 1987) ou le protocole de Yao (Andrew Chi-Chih Yao, « How to generate and exchange secrets », Foundations of Computer Science, 1986, 27th Annual Symposium, pages 162-167, IEEE, 1986) permettent de calculer le résultat de l'application d'une fonction à des données partagées entre deux entités sans qu'aucune de ces identités n'obtienne d'informations sur les données possédées par l'autre entité ou sur les résultats des calculs intermédiaires nécessaires au calcul du résultat final. De tels protocoles peuvent ainsi être appliqués à la recherche parmi les données de référence simplifiées de celles présentant une distance minimale avec la donnée biométrique simplifiée acquise auprès de l'individu à authentifier afin que ni le serveur de contrôle, ni le serveur de gestion n'apprenne d'informations concernant les données fournies par l'autre serveur, et qu'aucun des deux serveurs n'ait connaissance de l'ordonnancement des distances minimales correspondant aux données de référence fournies en résultat.

Plus précisément, de tels protocoles peuvent être appliqués à un algorithme de tri des distances entre la donnée biométrique simplifiée de l'individu et les données biométriques simplifiées de référence. Ces distances peuvent ainsi être triées de manière sécurisée par ordre croissant ou décroissant, et le nombre désiré de distances minimales peut être déterminé une fois l'ensemble des distances, correspondant à l'ensemble des données biométriques de référence, triées.

Alternativement, de tels protocoles peuvent être appliqués à un algorithme de recherche de valeur minimale. La distance minimale parmi l'ensemble des distances correspondant à l'ensemble des données biométriques de référence peut ainsi être déterminée de manière sécurisée. Une fois la distance minimale ainsi déterminée soustraite de l'ensemble des distances évaluées, une telle recherche peut être conduite à nouveau parmi ce nouvel ensemble de distances afin de déterminer une deuxième distance minimale. Un tel processus peut être répété autant de fois que nécessaire jusqu'à obtenir le nombre souhaité de distances minimales.

Néanmoins, de tels procédés sécurisés d'évaluation d'un certain nombre de valeurs minimales parmi un grand ensemble de distances peuvent s'avérer très couteux.

En effet, de tels protocoles sont basés sur l'évaluation sécurisée d'un circuit booléen représentant les opérations de calcul à réaliser. Le coût d'une telle évaluation augmente alors avec le nombre de portes de ce circuit ne correspondant pas à une opération ou exclusif XOR (Kolesnikov, V., Schneider, T., Improved garbled circuit: Free XOR gates and applications, International Colloquium on Automata, Languages and Programming (ICALP'08). LNCS, vol. 5126, pp. 486-498. Springer (2008)), et avec la profondeur du circuit.

Or les procédés existants de détermination de plusieurs distances minimales sécurisés par des protocoles à base de circuits booléens augmentent fortement le nombre de portes non-XOR du circuit booléen employé et la profondeur de ce circuit en requérant un tri de l'ensemble des distances parmi lesquelles les distances minimales sont recherchées, ou bien en requérant le parcours de l'intégralité de ces distances autant de fois que le nombre de distances minimales à déterminer.

L'application de tels procédés pour l'identification sécurisée d'un individu à partir d'une base de données contenant un nombre important de données biométriques de référence présente alors un coût très élevé.

Il existe donc un besoin d'un procédé d'identification sécurisée d'une entité permettant d'identifier un individu à l'aide d'un protocole de sécurisation à base de circuits booléens pour un coût de calcul moindre, en minimisant le nombre de portes non-XOR et la profondeur du circuit booléen employé pour déterminer plusieurs distances minimales entre une donnée biométrique de l'individu et des données biométriques de référence.

## PRESENTATION DE L'INVENTION

La présente invention propose selon un premier aspect un procédé d'identification d'une entité, mis en oeuvre par un système d'identification comprenant un serveur de gestion susceptible d'être relié à un dispositif de stockage stockant des données biométriques de référence indexées correspondant à des entités de référence et un serveur de contrôle susceptible d'acquérir une donnée biométrique de l'entité à identifier, ledit serveur de gestion et ledit serveur de contrôle étant susceptibles d'être reliés entre eux, à partir de données de distance indexées, lesdites données de distances indexées étant des distances calculées à partir des données biométriques de référence indexées stockées et de la donnée biométrique de l'entité à identifier acquise, lesdites données de distance indexées étant partagées entre ledit serveur de contrôle et ledit serveur de gestion de sorte qu'aucune desdites données de distance ne soit connue du serveur de gestion ou du serveur de contrôle, lesdites données de distance indexées étant des entiers binaires de longueur q', ledit procédé d'identification étant caractérisé en ce qu'il comprend :

- une **phase de détermination** d'un ensemble d'indices de minima, ledit ensemble d'indices de minima comprenant au plus un nombre prédéterminé d'indices de données de distance minimales parmi lesdites données de distance indexées, ladite phase de détermination comprenant :

    • préalablement, **une étape d'initialisation** lors de laquelle :

        ◦ une liste de données à traiter est déterminée, ladite liste de données à traiter comprenant lesdites données de distance indexées,
        ◦ un nombre restant de données de distance indexées à écarter est déterminé, ledit nombre restant de données de distance indexées à écarter étant égal à la différence entre le nombre de données de distance indexées et le nombre prédéterminé d'indices,

    • **une étape d'exécution** comprenant,
    pour chaque ensemble des $j^{\text{ème}}$ bits, dits bits courants, des données de distance indexées comprises dans ladite liste de données à traiter, dites données à traiter, j étant un entier variant de q'-1 à 0, la mise en oeuvre des étapes suivantes, en commençant par l'ensemble des bits de poids fort des données à traiter et en terminant par l'ensemble des bits de poids faible des données à traiter :

        ◦ **comparaison** d'un nombre d'indices d'un premier groupe d'indices de données de distance indexées au nombre restant de données indexées à écarter,
        ledit premier groupe d'indices comprenant les indices des données de distance indexées parmi ladite liste de données à traiter pour lesquelles ledit bit courant est égal à 1,

◦ **recherche** d'indices de minima comprenant :

■ si le nombre d'indices du premier groupe est inférieur au nombre restant de données indexées à écarter :

❖ retrait, de ladite liste de données à traiter, des données dont les indices appartiennent au premier groupe et,
❖ détermination d'un nouveau nombre restant de données indexées à écarter en soustrayant du nombre restant de données indexées à écarter le nombre d'indices du premier groupe ;

■ sinon :

❖ retrait, de ladite liste de données à traiter, des données de distance indexées dont les indices font partie d'un deuxième groupe d'indices de données de distance indexées,
ledit deuxième groupe comprenant les indices des données de distance indexées parmi ladite liste de
données à traiter pour lesquelles ledit bit courant est égal à 0, et
❖ ajout desdits indices du deuxième groupe à l'ensemble d'indices de minima;

- **une phase d'identification** de l'entité à identifier parmi les entités de référence correspondant aux données biométriques de références stockées associées aux indices de données de distance minimales déterminés lors de la phase de détermination,
les opérations sur des entiers binaires pour la mise en oeuvre d'au moins ladite étape d'exécution dudit procédé d'identification, étant traduites sous la forme d'au moins un circuit booléen, ledit circuit booléen étant ensuite utilisé pour mettre en oeuvre au moins ladite étape d'exécution dudit procédé, cette mise en oeuvre étant réalisée de manière sécurisée entre le serveur de contrôle et le serveur de gestion à l'aide d'un protocole de calcul sécurisé multipartite (« Secure Multi party Computation » ou (SMC)) permettant une évaluation sécurisée dudit circuit booléen,

ledit procédé d'identification étant caractérisé en outre en ce que :

- l'appartenance des données de distance indexées à ladite liste de données à traiter est mémorisée sous la forme d'un marqueur de données à traiter, ledit marqueur de données à traiter étant un entier binaire de longueur égale au nombre de données de distance indexées et la valeur du $i^{ème}$ bit dudit marqueur indiquant l'appartenance ou non de la $i^{ème}$ donnée de distance indexée à ladite liste de données à traiter,
- l'appartenance des indices des données de distance indexées à l'ensemble d'indices de minima est mémorisée sous la forme d'un marqueur de minima, ledit marqueur de minima étant un entier binaire de longueur égale au nombre de données de distance indexées n, la valeur du $i^{ème}$ bit dudit marqueur indiquant l'appartenance ou non de l'indice i à l'ensemble d'indices de minima,
- le nombre de données de distance indexées $d_1$, ..., $d_n$ étant égal à n :

- l'étape d'initialisation comprend en outre l'initialisation de tous les bits du marqueur de données à traiter b et du marqueur de minima c à la valeur 1,
- l'étape de comparaison comprend des étapes de :

• détermination du nombre p d'indices du premier groupe en comptant le nombre d'éléments égaux à la valeur 1 parmi l'ensemble ($d_1^{\,j}$ AND $b_1$, ..., $d_n^{\,j}$ AND $b_n$), la notation $d_i^{\,j}$ représentant la valeur du $j^{ème}$ bit de la donnée de distance indexée d'indice i,
• si le nombre p d'indices du premier groupe est inférieur au nombre restant de données indexées à écarter r, fixation d'un bit de comparaison e à la valeur 1,
• sinon, fixation dudit bit de comparaison e à la valeur 0,

- l'étape de recherche est mise en oeuvre en réalisant :

• la mise à jour du nombre restant de données indexées à écarter r, le nombre restant de données indexées à écarter r étant remplacé par la valeur [((r-p) XOR r) AND e] XOR r,
• la mise à jour de chaque bit du marqueur de minima c, chaque $i^{ème}$ bit $c_i$ du marqueur de minima c étant remplacé par la valeur [($d_i^{\,j}$ OR e) OR ($b_i$ XOR 1)] AND $c_i$,
• la mise à jour de chaque bit du marqueur de données à traiter b, chaque $i^{ème}$ bit $b_i$ du marqueur de données à traiter b étant remplacé par la valeur (e XOR $d_i^j$) AND $b_i$.

Un tel procédé permet de minimiser le coût d'une identification sécurisée d'une entité en ne lisant chaque bit de chaque donnée de distance indexée qu'une unique fois. La taille du circuit logique à évaluer de manière sécurisée est ainsi grandement réduite.

L'utilisation de tels marqueurs permet de déterminer à tout instant pour chaque donnée de distance indexée si elle doit continuer à être traitée ou non lors des étapes ultérieures de recherche et si elle a été déterminée comme une donnée de distance minimale sans avoir à ne relire aucune donnée de distance indexée. Chaque bit de chaque donnée de distance indexée n'est donc toujours lu qu'une unique fois au cours de la détermination des k données de distance minimales.

La phase d'identification peut comprendre une détermination d'au moins une donnée biométrique de référence similaire à la donnée biométrique acquise de l'entité à identifier, parmi les données biométriques de références stockées associées aux indices de données de distance minimales déterminés lors de la phase de détermination.

L'entité à identifier peut ainsi être identifiée uniquement à partir de sa donnée biométrique acquise en ne comparant celle-ci de manière précise qu'à un nombre limité de données biométriques de référence.

Le procédé d'identification selon le premier aspect peut comprendre, à l'issue de la phase de détermination, si le nombre d'indices de l'ensemble d'indices de minima déterminé est inférieur au nombre prédéterminé d'indices de données de distance minimales, une **étape de complétion** au cours de laquelle des indices de données de distance indexées appartenant à la liste de données à traiter sont ajoutés à l'ensemble d'indices de minima, de sorte que ledit ensemble comprenne un nombre d'indices égal au nombre prédéterminé d'indices de données de distance minimales.

Ceci permet d'obtenir le nombre souhaité de données de distance minimales, même lorsque plusieurs données de distance indexées sont égales et qu'une partie seulement de ces distances égales doivent être considérées comme données de distance minimales.

Ladite étape de complétion peut alors comprendre successivement pour chaque indice i des données de distance indexées :

- si le nombre restant de données indexées à écarter r est supérieur à zéro, la détermination d'une nouvelle valeur du nombre restant de données indexées à écarter en soustrayant le $i^{ème}$ bit $b_i$ du marqueur de données à traiter b du nombre restant de données indexées à écarter, et la mise à zéro de la valeur du $i^{ème}$ bit $b_i$ du marqueur de données à traiter b,
- la mise à jour du $i^{ème}$ bit $c_i$ du marqueur de minima c par la valeur $c_i = c_i$ AND ($b_i$ XOR 1).

L'intégration de ces opérations au sein du circuit logique à évaluer permet d'obtenir le nombre voulu de données de distance minimales de manière sécurisée, sans avoir à divulguer aucune donnée, notamment le marqueur de minima c, avant la fin de la détermination de l'ensemble des données de distance minimales à déterminer.

Lesdites données biométriques de référence peuvent être des entiers binaires et le procédé selon le premier aspect peut comprendre préalablement :

- **une phase d'acquisition** par le serveur de contrôle de la donnée biométrique de l'entité à identifier,
- **une phase d'obtention** d'une donnée d'identité de l'entité à identifier et de données d'identité de références, à partir respectivement de la donnée biométrique acquise et des données biométriques de référence indexées, de sorte que ladite donnée d'identité de l'entité à identifier et les données d'identité de références soient des entiers binaires de moindre taille que celle desdites données biométriques, les indices des données d'identité de référence étant associés aux indices des données biométriques de référence,
- **une phase de calcul** des données de distance comprenant pour chaque donnée d'identité de référence le calcul sécurisé d'une distance entre la donnée d'identité de l'entité à identifier et ladite donnée d'identité de référence.

La phase d'identification du procédé selon le premier aspect peut comprendre en outre des étapes de :

- **calcul,** pour chaque donnée biométrique de référence dont l'indice est associé à un indice de l'ensemble de minima déterminé, d'un taux de similarité entre la donnée biométrique acquise de l'entité à identifier et ladite donnée biométrique de référence;
- **détermination** d'au moins une donnée biométrique de référence dont le taux de similarité dépasse un seuil prédéterminé ;
- **identification** de l'entité à identifier à partir des données biométriques de référence déterminées.

L'utilisation de données de distance simplifiées de moindre longueur que les données biométriques de référence permet de réaliser plus rapidement la détermination des données de distance minimales et donc d'accélérer l'identification de l'entité à identifier.

Dans une variante de mise en oeuvre :

- le calcul d'un taux de similarité entre la donnée biométrique acquise de l'entité à identifier et ladite donnée biométrique de référence comprend le calcul d'une distance entre la donnée biométrique acquise de l'entité à identifier et ladite donnée biométrique de référence ;
- ladite au moins une donnée biométrique de référence déterminée est ladite au moins une donnée biométrique de référence pour laquelle la distance calculée est inférieure à un seuil prédéterminé.

Le protocole de calcul sécurisé multipartite (Secure Multi party Computation (SMC)) peut être le protocole de Yao ou le protocole GMW.

Selon un deuxième aspect, l'invention concerne un produit programme d'ordinateur comprenant des instructions de code pour l'exécution d'un procédé d'identification selon le premier aspect lorsque ce programme est exécuté par un processeur.

Selon un troisième aspect, l'invention concerne un système d'identification d'une entité comprenant un serveur de gestion susceptible d'être relié à un dispositif de stockage stockant des données biométriques de référence indexées correspondant à des entités de référence et un serveur de contrôle susceptible d'acquérir une donnée biométrique de l'entité à identifier, ledit serveur de gestion et ledit serveur de contrôle étant susceptibles d'être reliés entre eux et partageant des données de distance indexées, de sorte qu'aucune desdites données de distance ne soit connue du serveur de gestion ou du serveur de contrôle, lesdites données de distances indexées étant des distances calculées à partir des données biométriques de référence indexées stockées et de la donnée biométrique de l'entité à identifier acquise caractérisé en ce que : ledit serveur de contrôle et ledit serveur de gestion comprennent un processeur configuré pour mettre en oeuvre les phases et étapes d'un procédé d'identification selon le premier aspect.

De tels produit programme d'ordinateur et système d'identification présentent les mêmes avantages que ceux évoqués pour le procédé selon le premier aspect.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- la figure 1 représente un système d'identification selon un mode de réalisation de l'invention ;
- la figure 2 est un diagramme schématisant une mise en oeuvre d'un procédé d'identification selon l'invention.

## DESCRIPTION DETAILLEE

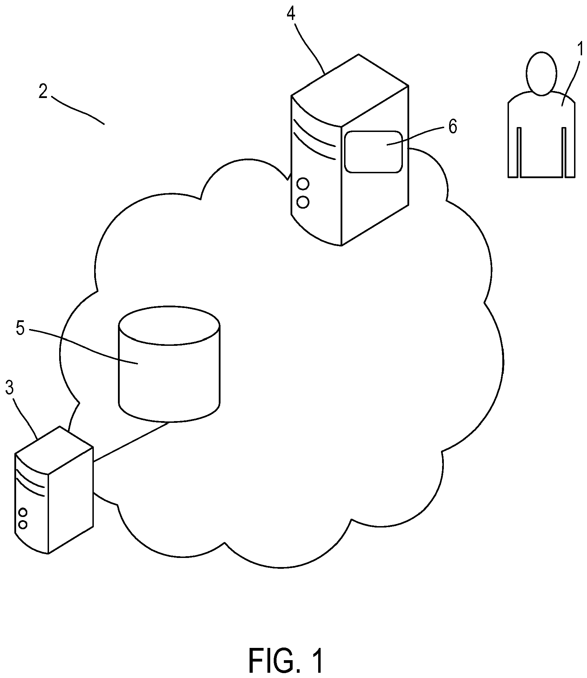

La présente invention concerne une mise en oeuvre d'un procédé d'identification d'une entité 1 par un système d'identification 2 comprenant un serveur de gestion 3 et un serveur de contrôle 4 susceptibles d'être reliés entre eux, comme représenté en **Figure 1.** Une telle entité peut être un individu ou bien un objet possédant des données biométriques tel qu'un passeport biométrique. Le serveur de gestion peut être relié à un dispositif de stockage 5 stockant n données biométriques de référence indexées $(Y_1,...,Y_n)$ pouvant être des entiers binaires de longueur Q, correspondant à n entités de référence enregistrées auprès du serveur de gestion.

Une telle identification peut être réalisée à partir d'un nombre n de données de distance indexées $(d_1,...,d_n)$ partagées entre le serveur de contrôle et le serveur de gestion. Ces données de distance peuvent être des données binaires de longueur q' correspondant à des distances, par exemple de Hamming, calculées à partir d'une donnée biométrique de l'entité à identifier acquise par le serveur de contrôle et des données biométriques de référence indexées stockées dans le dispositif de stockage 5.

Les serveurs de contrôle et de gestion peuvent chacun comprendre une mémoire vive et des moyens de stockage internes tels qu'une mémoire non volatile réinscriptible (mémoire flash ou mémoire EEPROM) et des moyens de traitement comportant un processeur. Les serveurs peuvent également comprendre des moyens d'interface leur permettant de dialoguer entre eux, de type filaire tel qu'une liaison Ethernet, ou sans-fil tel qu'une connexion Wifi ou Bluetooth. Le serveur de gestion peut également être connecté par le biais d'une connexion USB, Ethernet, Firewire, eSata, etc... au dispositif de stockage 5 tel qu'un disque dur externe ou un disque dur en réseau (« NAS »).

A titre d'exemple, de telles données biométriques peuvent être des empreintes digitales, ADN, vocales ou bien encore des images d'iris ou de réseaux veineux.

Le serveur de contrôle peut comprendre un dispositif de capture 6 de telles données biométriques, tel qu'un lecteur d'empreinte digitale, un microphone, ou un dispositif d'imagerie d'iris. Ce dispositif de capture peut être employé pour acquérir la donnée biométrique acquise pour l'entité 1.

Afin d'identifier l'entité à identifier en un temps raisonnable, le procédé propose de déterminer parmi ces données de distance indexées un nombre prédéterminé k d'indices des données de distance minimales parmi les données de distance indexées. Une fois ces k données de distance minimales déterminées, l'identification de l'entité peut par exemple être réalisée en ne comparant à la donnée biométrique acquise pour l'entité 1 que les k données biométriques de référence correspondant à ces données de distance minimale.

Afin de réaliser une telle détermination de k données de distance minimales de manière sécurisée, un protocole de sécurisation multipartite, tel que le protocole GMW ou le protocole de Yao, utilisant des circuits booléens peut être employé. Les étapes de calcul nécessaires à cette détermination doivent alors être mises sous la forme d'un circuit booléen.

Le procédé propose de limiter la taille de ce circuit booléen, c'est-à-dire le nombre de portes non-XOR de ce circuit et sa profondeur afin de limiter le coût d'une telle détermination sécurisée de k données de distance minimales parmi les données de distance indexées (Kolesnikov, V., Schneider, T., Improved garbled circuit: Free XOR gates and applications, International Colloquium on Automata, Languages and Programming (ICALP'08). LNCS, vol. 5126, pp. 486-498. Springer (2008)).

Pour cela, le procédé propose tout d'abord de traiter simultanément des ensembles des données de distance indexées en analysant simultanément la valeur du jème bit, dit bit courant, de ces données de distance indexées, en commençant par le bit de poids fort de ces données de distance. L'analyse du bit de poids fort de l'ensemble des données de distance indexées $(d_1,...,d_n)$ permet en effet de séparer ces données de distances en deux groupes : un groupe A dont le bit de poids fort est égal à 1 et un groupe B dont le bit de poids fort est égal à 0. Quelle que soit la valeur des autres bits de ces données, les distances du groupe A sont nécessairement toutes plus grandes que celles du groupe B.

La recherche d'un nombre k de données de distance minimales parmi un ensemble de n données de distance indexées équivaut à la recherche dans l'ensemble des n données de distance indexées d'un nombre (n-k) de données de distance non-minimales. Si le nombre de données du groupe A est inférieur au nombre (n-k) de données de distance non-minimales à rechercher, les données du groupe A peuvent être écartées pour le reste de la recherche : les k données de distance minimales à déterminer se trouvent nécessairement parmi les données du groupe B. Les $n_A$ données du groupe A sont alors toutes des données de distance non minimales. A l'inverse, si le nombre de données du groupe A est supérieur au nombre (n-k) de données de distance non-minimales à rechercher, toutes ces données de distance non-minimales font nécessairement partie du groupe A. En conséquence toutes les $n_B$ données du groupe B font partie des k données de distance minimales à déterminer. Ces données du groupe B peuvent donc être mémorisées et écartées pour le reste de la recherche.

Une fois le bit de poids fort de toutes les données de distance indexées analysé, une telle analyse peut être reconduite en analysant le bit courant suivant des données de distance indexées restant à analyser, c'est-à-dire n'ayant pas été écartées du reste de la recherche au cours de l'étape précédente, pour y chercher $(k-n_B)$ données de distance minimales ou bien $(n-k-n_A)$ données de distance non minimales selon le résultat de l'analyse ci-dessus.

Une telle analyse peut ensuite réitérée jusqu'à ce que le bit courant analysé ait atteint le bit de poids faible des données de distance.

Chaque analyse d'un ensemble de données de distance restant à traiter pour une position du bit courant permet ainsi de séparer ces données de distance en deux groupes et d'écarter du reste de la recherche les données d'un de ces deux groupes, soit en tant que données de distance minimales, soit en tant que données de distance non-minimales.

La détermination des k données de distance minimales ne requiert ainsi qu'un seul parcours des données de distance indexées : chaque bit d'une donnée de distance indexée n'est lu qu'une unique fois.

De plus, afin de pouvoir mettre les opérations à réaliser sous la forme d'un circuit booléen, et de limiter la taille et la complexité de ce circuit booléen, le procédé propose d'employer un marqueur de données à traiter b et un marqueur de minima c afin de mémoriser l'appartenance d'une donnée de distance indexée respectivement à un ensemble des données de distance à traiter pour la recherche des données de distance minimales, c'est-à-dire non écartée du processus de recherche, et à l'ensemble des données de distance minimales recherchées. De tels marqueurs peuvent être des entiers binaires de longueur égale au nombre n de données de distance indexées. La valeur du $i^{ème}$ bit du marqueur de données b et du marqueur de minima c peut ainsi indiquer l'appartenance de la donnée de distance indexée $d_i$ d'indice i respectivement à l'ensemble des données de distance à traiter et à l'ensemble des données de distance minimales recherchées.

L'utilisation de tels marqueurs permet lors de la recherche des k données de distance minimales de mémoriser si une donnée de distance indexée doit continuer à être traitée ou non et si elle fait partie des k données de distance minimales déterminées ou non sans avoir à relire aucune donnée de distance indexée. Chaque bit de chaque donnée de distance indexée n'est donc toujours lu qu'une unique fois au cours de la détermination des k données de distance minimales.

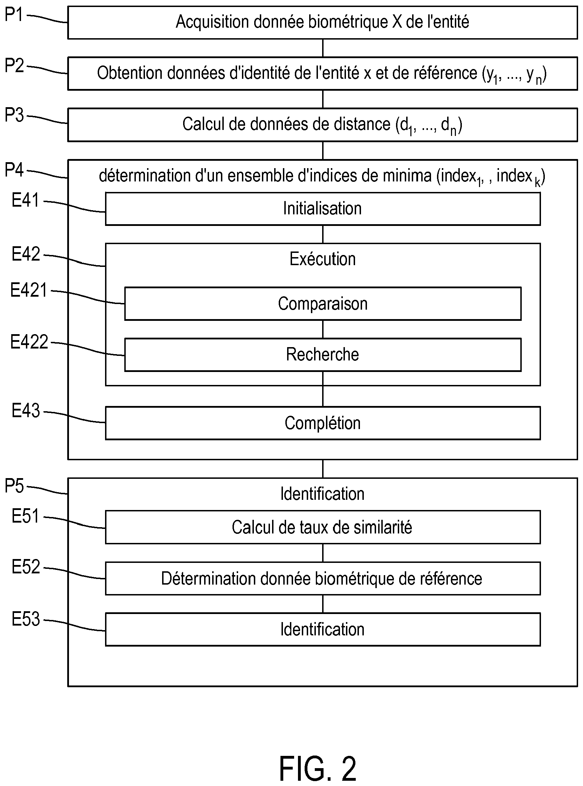

Le procédé d'identification peut comprendre, en référence à la **figure 2,** une phase d'acquisition P1 au cours de laquelle le serveur de contrôle acquiert une donnée biométrique X de l'entité 1 à identifier. Une telle acquisition peut être mise en oeuvre par le dispositif de capture 6. Une telle donnée biométrique peut être un entier binaire de longueur Q.

Le procédé d'identification peut ensuite comprendre une phase d'obtention P2 au cours de laquelle une donnée d'identité de l'entité à identifier x est obtenue à partir de la donnée biométrique acquise de l'entité à identifier X et des données d'identité de références $(y_1, ..., y_n)$ sont obtenues à partir des données biométriques de référence indexées $(Y_1, ..., Y_n)$.

Ladite donnée d'identité de l'entité à identifier x et les données d'identité de références $(y_1,..., y_n)$ peuvent être des entiers binaires de taille q moindre que celle Q desdites données biométriques.

Les indices des données d'identité de référence sont associés aux indices des données biométriques de référence. Une donnée biométrique et la donnée d'identité dérivée peuvent par exemple avoir le même indice.

A titre d'exemple, dans le cas où les données biométriques sont des images d'iris codées sur 2048 bits, les serveurs de contrôle et de gestion peuvent réduire les tailles des données d'identité à 128 bits. Pour ce faire, les serveurs de contrôle et de gestion peuvent convenir d'un ensemble d'indexation A de cardinal q qui soit un sous-ensemble de l'ensemble {1, .., Q}, tels que les q bits d'une donnée biométrique $Y_i$ indexés par les éléments de A soient parmi les bits les plus significatifs de la donnée biométrique $Y_i$. Dans le cas de l'exemple ci-dessus, Q vaut 2048 et q vaut 128.

Les serveurs de contrôle et de gestion génèrent alors des données d'identité de taille réduite x et $y_i$, i étant compris entre 1 et n, ces données comprenant respectivement les bits de X et $Y_i$ indexés par A, de sorte que les données x et $y_i$ sont codées sur q bits.

Le procédé d'identification peut ensuite comprendre une phase de calcul P3 au cours de laquelle les serveurs de contrôle et de gestion calculent les données de distance $(d_1, ..., d_n)$, comprenant pour chaque donnée d'identité de référence $y_i$ le calcul sécurisé d'une distance, par exemple de Hamming, entre la donnée d'identité de l'entité à identifier x et ladite donnée d'identité de référence $y_i$. La sécurisation d'un tel calcul peut également être assurée par l'emploi d'un protocole de calcul sécurisé multipartite.

Les données de distance ainsi obtenues sont des données de distance simplifiées de longueur q' inférieure à la taille des données biométriques de référence. De telles données de distance ne permettent pas de déterminer de manière sûre la donnée biométrique correspondant à l'entité à identifier mais elles peuvent être employées pour déterminer k données biométriques candidates correspondant à des données de distance minimales. La légèreté de ces données de distance simplifiées permet de réaliser plus rapidement cette détermination des données de distance minimales.

A partir des données de distance indexées calculées (d1,...,dn), entiers binaires de longueur q', les serveurs de contrôle et de gestion réalisent, lors d'une phase de détermination P4, la détermination d'un ensemble I d'indices de minima (index1, ..., indexk).

Ledit ensemble I d'indices de minima comprend au plus un nombre prédéterminé k d'indices de données de distance minimales parmi lesdites données de distance indexées.

Cette phase de détermination P4 peut comprendre préalablement, **une étape d'initialisation** E41 lors de laquelle :

  ◦ une liste de données à traiter est déterminée, ladite liste de données à traiter comprenant lesdites données de distance indexées,
  ◦ un nombre restant de données de distance indexées à écarter r est déterminé, ledit nombre restant de données de distance indexées à écarter étant égal à la différence entre le nombre de données de distance indexées n et le nombre prédéterminé d'indices k.

Aucune donnée de distance n'ayant encore été traitée à ce moment du procédé, toutes les données de distance $(d_1,...,d_n)$ peuvent encore être des données de distance minimales ou de distance non-minimales. Toutes ces données sont donc pour l'instant ajoutées à la liste de données à traiter.

Au cours de la mise en oeuvre de l'étape suivante, certaines de ces données de distance vont être reconnues comme des données de distance non-minimales et écartées du processus de recherche. Afin de garder le compte du nombre de données de distance ainsi écartées le nombre restant de données de distance indexées à écarter r va être progressivement mis à jour. A ce moment du procédé, puisqu'aucune donnée n'a encore été traitée, ce nombre est initialisé à la valeur n-k.

La phase de détermination P4 peut ensuite comprendre **une étape d'exécution** E42 comprenant, pour chaque ensemble des $j^{ème}$ bits, dits bits courants, des données de distance indexées comprises dans ladite liste de données à traiter, dites données à traiter, j étant un entier variant de q'-1 à 0, une recherche de données de distance minimales parmi ces données de distance à traiter en fonction de la valeurs de ces bits courants. Une telle recherche est réalisée en commençant par l'ensemble des bits de poids fort des données à traiter et en terminant par l'ensemble des bits de poids faible des données à traiter.

Les données de distance minimales sont ainsi cherchées tout d'abord dans la liste de données à traiter créée lors de l'étape d'initialisation E41 et comprenant toutes les données de distance indexées, en analysant la valeur du bit de poids fort des données à traiter.

En fonction du résultat de cette première recherche, la liste de données à traiter peut être mise à jour et la recherche peut être reconduite sur la liste de données à traiter mise à jour en analysant cette fois-ci la valeur du bit suivant le bit de poids fort des données à traiter.

Plus précisément, l'étape d'exécution E42 peut comprendre pour chaque ensemble des $j^{ème}$ bits, dits bits courants, des données de distance indexées comprises dans la liste de données à traiter une étape de **comparaison** E421 et une étape de **recherche** E422.

Cette étape de comparaison E421 réalise la comparaison d'un nombre d'indices p d'un premier groupe d'indices de données de distance indexées au nombre restant de données indexées à écarter r, ledit premier groupe d'indices comprenant les indices des données de distance indexées parmi ladite liste de données à traiter pour lesquelles ledit bit courant est égal à 1.

L'analyse du bit courant des données à traiter permet ainsi de les partitionner en deux groupes. Un de ces deux groupes ne comprend nécessairement que des données de distance minimales ou que des données de distance non-minimales. Les données de ce groupe vont donc pouvoir être catégorisées et écartées du processus de recherche.

L'étape de recherche E422 mise en oeuvre suite à chaque étape de comparaison E421 réalise les opérations suivantes.

Si le nombre d'indices du premier groupe p est inférieur au nombre restant de données indexées à écarter r, les données dont les indices appartiennent au premier groupe sont retirées de ladite liste de données à traiter. Dans un tel cas de figure, les données de distance minimales restant à trouver sont en effet toutes comprises dans le deuxième groupe. Un nouveau nombre restant de données indexées à écarter r peut alors être déterminé en soustrayant du nombre restant de données indexées à écarter r le nombre d'indices du premier groupe p.

Sinon, c'est-à-dire si p est supérieur ou égal à r, les données de distance indexées dont les indices font partie du deuxième groupe d'indices de données de distance indexées, c'est-à-dire les données de distance indexées parmi la liste de données à traiter dont le bit courant est égal à 0, sont retirées de ladite liste de données à traiter. En effet, toutes les données de distance non-minimales restant à déterminer font alors partie du premier groupe et le deuxième groupe ne comprend que des données de distance minimales. Les indices du deuxième groupe peuvent alors être ajoutés à l'ensemble d'indices de minima.

A chaque analyse d'un ensemble de bits courants, tous placés à la même position, des données de la liste de données à traiter courante, les données à traiter sont ainsi partitionnées en deux groupes et les données d'un des deux groupes sont identifiées comme données de distance minimales ou non-minimales et retirées de la liste de données à traiter. Si des données de distance non-minimales ont été identifiées et écartées, le nombre restant r de données de distance indexées à écarter est mis à jour.

Une telle détermination de k données de distance minimale tout particulièrement intéressante pour des données biométriques, pourrait également être mise en oeuvre sur des données de distance obtenues à partir d'autres types de données que des données biométriques, par exemple à partir de données de média telles que des données d'image ou de vidéos dans le cadre d'un procédé de reconnaissance d'objet, de classification d'image ou de suivi de mouvement dans une vidéo.

A l'issue de la phase de détermination, il est possible que le nombre d'indices de minima déterminés ne soit pas exactement égal au nombre prédéterminé d'indices de données de distance minimales recherché, par exemple si plusieurs données de distance indexées sont égales à la même valeur.

Le procédé peut alors comprendre une étape de **complétion** E43 au cours de laquelle, si le nombre d'indices de l'ensemble d'indices de minima déterminé est inférieur au nombre prédéterminé k d'indices de données de distance minimales, des indices de données de distance indexées appartenant à la liste de données à traiter sont ajoutés à l'ensemble d'indices de minima pour que l'ensemble d'indices de données de distance minimales comprenne exactement le nombre prédéterminé k d'indices de minima.

Un tel procédé peut être mis en oeuvre à l'aide du marqueur de données à traiter b et du marqueur de minima c tels que définis ci-dessus. L'appartenance des données de distance indexées à ladite liste de données à traiter est alors mémorisée sous la forme du marqueur de données à traiter b, ledit marqueur de données à traiter étant un entier binaire de longueur égale au nombre n de données de distance indexées et la valeur du $i^{ème}$ bit dudit marqueur indiquant l'appartenance ou non de la $i^{ème}$ donnée de distance indexée à ladite liste de données à traiter.

De même, l'appartenance des indices des données de distance indexées à l'ensemble d'indices de minima I est mémorisée sous la forme du marqueur de minima c, ledit marqueur de minima étant un entier binaire de longueur égale au nombre n de données de distance indexées, la valeur du $i^{ème}$ bit dudit marqueur indiquant l'appartenance ou non de l'indice i à l'ensemble d'indices de minima I.

L'étape d'initialisation E41 comprend alors en outre l'initialisation de tous les bits du marqueur de données à traiter b et du marqueur de minima c à la valeur 1. Une telle initialisation indique alors qu'aucune donnée n'a pour l'instant été traitée ni reconnue comme donnée de distance minimale.

L'étape de comparaison E421 comprend alors, lors de sa mise en oeuvre pour un ensemble de $j^{ème}$ bits courants des données de la liste de données à traiter, des étapes de :

- détermination du nombre p d'indices du premier groupe en comptant le nombre d'éléments égaux à la valeur 1 parmi l'ensemble ($d_1$ $^j$ AND $b_1$, ..., $d_n$ $^j$ AND $b_n$), la notation $d_i$ $^j$ représentant la valeur du $j^{ème}$ bit de la donnée de distance indexée d'indice i,
- si le nombre p d'indices du premier groupe est inférieur au nombre restant de données indexées à écarter r, fixation d'un bit de comparaison e à la valeur 1,
- sinon, fixation dudit bit de comparaison e à la valeur 0.

La valeur du bit de comparaison e permet de mémoriser le résultat de la comparaison du nombre p d'indices du premier groupe et du nombre restant de données indexées à écarter r, afin de permettre la transformation de ce procédé en un circuit booléen pouvant être évalué de manière sécurisée.

Enfin, l'étape de recherche E422 est mise en oeuvre en réalisant :

- la mise à jour du nombre restant de données indexées à écarter r, le nombre restant de données indexées à écarter r étant remplacé par la valeur [((r-p) XOR r) AND e] XOR r,
- la mise à jour de chaque bit du marqueur de minima c, chaque $i^{ème}$ bit $c_i$ du marqueur de minima c étant remplacé par la valeur [($d_i$ $^j$ OR e) OR ($b_i$ XOR 1)] AND Ci,
- la mise à jour de chaque bit du marqueur de données à traiter b, chaque $i^{ème}$ bit $b_i$ du marqueur de données à traiter b étant remplacé par la valeur (e XOR $d_i^j$) AND $b_i$.

L'utilisation du bit de comparaison e, des marqueurs de données à traiter b et de minima c, et des formules logiques ci-dessus permet de ne pas avoir besoin de distinguer plusieurs formules logiques en fonction du résultat de la comparaison entre le nombre p d'indices du premier groupe et du nombre restant de données indexées à écarter r. Ceci permet de traduire les opérations à réaliser pour mettre en oeuvre ce procédé sous la forme d'un circuit booléen à évaluer de manière sécurisée à l'aide d'un protocole de calcul sécurisé multipartite, et de minimiser la taille du circuit booléen généré.

Pour que l'ensemble d'indices de données de distance minimales comprennent exactement le nombre prédéterminé k d'indices de minima, l'étape de complétion peut alors comprendre successivement pour chaque indice i des données de distance indexées :

- si le nombre restant de données indexées à écarter r est supérieur à zéro, la détermination d'une nouvelle valeur du nombre restant de données indexées à écarter en soustrayant le $i^{ème}$ bit $b_i$ du marqueur de données à traiter b du nombre restant de données indexées à écarter, et la mise à zéro de la valeur du $i^{ème}$ bit $b_i$ du marqueur de données à traiter b,
- la mise à jour du $i^{ème}$ bit $c_i$ du marqueur de minima c par la valeur $c_i$ = $c_i$ AND ($b_i$ XOR 1).

Les r premières données de distance restant à traiter sont ainsi considérées comme des données de distance non minimales et écartées en passant les bits correspondant du marqueur de données à traiter b à zéro, puis les données de distance restant à traiter suivantes sont considérées comme des données de distance minimales et les bits correspondants du marqueur de minima c sont mis à zéro.

A l'issue de cette phase de détermination, k indices de minima ont été déterminés. Ces indices correspondent aux k données d'identité de référence les plus proches de la donnée d'identité de l'entité à identifier. Ces k données d'identité sont alors considérées comme étant les meilleures candidates pour tenter d'identifier l'entité.

Un exemple de mise en oeuvre de la phase de détermination P4 est donné en **annexe.**

On suppose dans cet exemple qu'on cherche à déterminer k=4 données de distance minimales parmi les n=6 valeurs suivantes (y1,...,y6) = (56, 12, 44, 41, 26, 44).

Lors de l'étape d'initialisation, on fixe tous les bits des marqueurs b et c à 1. On calcule également la valeur initiale du nombre restant de données de distance indexées à écarter r = n-k = 6- 4 = 2. La liste des données à traiter comprend alors toutes les données de distance.

L'étape d'exécution est ensuite mise en oeuvre.

Une première étape de comparaison et une première étape de recherche sont mises en oeuvre pour les bits de poids forts des données de distance.

Le nombre d'élément du premier groupe de données de distance, dont le bit de poids fort est égal à 1, s'élève à 4 et est donc supérieur ou égal au nombre restant de données de distance indexées r = 2.

En conséquence, les données de deuxième groupe (12 et 26) sont des données de distance minimales et peuvent être écartées de la recherche pour les étapes ultérieures. Les bits correspondants des marqueurs b et c sont alors mis à zéro.

Une nouvelle étape de comparaison et une nouvelle étape de recherche sont alors mises en oeuvre pour les bits suivants, les 5$^{ème}$ bits, des données restant à traiter (56, 44, 41, 44).

Une seule donnée (56) présente alors un bit courant égal à 1. En conséquence, cette donnée n'est pas une donnée de distance minimale et peut être écartée. Le bit correspondant du marqueur b est alors mis à zéro et le nombre restant de données de distance indexées est mis à jour à la valeur 1.

Une nouvelle étape de comparaison et une nouvelle étape de recherche sont alors mises en oeuvre pour les bits suivants, les 4èmes bits, des données restant à traiter (44, 41, 44).

Tous ces bits étant égaux à 1, la dernière donnée de distance non-minimale à identifier fait partie de ces données de distance et aucune donnée de distance minimale supplémentaire n'est identifiée à cette étape.

Une nouvelle étape de comparaison et une nouvelle étape de recherche sont alors mises en oeuvre pour les bits suivants, les 3èmes bits, des données restant à traiter (44, 41, 44).

Le nombre d'élément du premier groupe de données de distance, dont le bit courant est égal à 1, s'élève à 2 et est donc supérieur ou égal au nombre restant de données de distance indexées r = 1.

En conséquence, la donnée du deuxième groupe (41) est une donnée de distance minimale et peut être écartée de la recherche pour les étapes ultérieures. Les bits correspondants des marqueurs b et c sont alors mis à zéro.

Il reste alors une donnée de distance minimale et une donnée de distance non-minimale parmi les deux données de distance restant à traiter (44, 44). Ces données étant égales, la mise en oeuvre de nouvelles étapes de comparaison et de recherche pour le 2$^{ème}$ bit de ces données puis pour le bit de poids faible de ces données ne permet pas d'identifier la dernière donnée de distance minimale à identifier.

L'étape de complétion est alors mise en oeuvre afin de désigner la première des deux données, dans leur ordre d'indexation, comme données de distance non minimale et la deuxième de ces données de distance comme donnée de distance minimale. Le bit correspondant du marqueur de minima c'est alors mis à zéro et les quatre données de distance minimales identifiées sont les deuxième, quatrième, cinquième et sixième données de distance minimale, c'est-à-dire les valeurs 12, 41, 26 et 44.

Le serveur de contrôle et de gestion mettent ensuite en oeuvre **une phase d'identification** P5 de l'entité à identifier parmi les entités de référence correspondant aux données biométriques de références stockées associées aux indices de données de distance minimales (index$_1$, ...index$_k$) déterminés lors de la phase de détermination.

Une telle phase d'identification peut comprendre une détermination d'au moins une donnée biométrique de référence, parmi les données biométriques de références stockées associées aux indices de données de distance minimales (index$_1$, ...index$_k$) déterminés lors de la phase de détermination, similaire à la donnée biométrique acquise de l'entité à identifier.

Le nombre de comparaisons à effectuer entre la donnée de l'entité et les données de référence étant réduit à k, ces comparaisons peuvent cette fois être faites sur les données biométriques complètes afin de réaliser une identification avec la précision la plus élevée possible.

Alternativement, l'entité à identifier peut être identifiée sans réutiliser la donnée biométrique acquise et les données biométriques de référence. Par exemple, une seconde donnée relative à l'entité à identifier peut être acquise, telle qu'une photographie ou un mot de passe, et comparée à des données de même type, qui peuvent par exemple être enregistrées dans le dispositif de stockage 5, pour les entités de référence. Grâce à la mise en oeuvre de la phase de détermination, cette seconde donnée peut n'être comparée qu'aux données de même types enregistrées pour les entités de référence associées aux indices de données de distance minimales (index$_1$, ...index$_k$) déterminés lors de la phase de détermination. La donnée biométrique acquise peut ainsi être employée pour faire un premier tri parmi les entités de référence enregistrées auprès du serveur de gestion, puis une deuxième donnée de type différent peut être employée pour l'identification finale de l'entité à identifier.

Une telle phase d'identification peut comprendre une **étape de calcul** E51 au cours de laquelle est mis en oeuvre un calcul, pour chaque donnée biométrique de référence Y$_i$ dont l'indice est associé à un indice de l'ensemble de minima déterminé I, d'un taux de similarité entre la donnée biométrique acquise de l'entité à identifier X et ladite donnée biométrique de référence Y$_i$.

La phase d'identification peut ensuite comprendre une **étape de détermination** E52 d'au moins une donnée biométrique de référence dont le taux de similarité dépasse un seuil prédéterminé, et une **étape d'identification** E53 de l'entité à identifier à partir des données biométriques de référence déterminées.

Le calcul d'un taux de similarité entre la donnée biométrique acquise de l'entité à identifier X et une donnée biométrique de référence Y$_i$ peut comprendre le calcul d'une distance, par exemple de Hamming, entre la donnée biométrique acquise de l'entité à identifier et ladite donnée biométrique de référence. L'au moins une donnée biométrique de référence déterminée lors de l'étape de détermination E52 est alors ladite au moins une donnée biométrique de référence pour laquelle la distance calculée est inférieure à un seuil prédéterminé.

Si aucun taux de similarité calculé n'atteint le seuil prédéterminé requis, aucune donnée biométrique de référence n'est suffisamment proche de la donnée biométrique acquise pour identifier positivement l'entité à identifier. Son identification peut alors être refusée.

Une telle identification pourrait être mise en oeuvre à partir de données de distance minimales correspondant à des distances entre d'autres types de données, par exemple des données d'image telles que des portraits d'individus.

Comme indiqué précédemment, au moins une partie du procédé est mis en oeuvre de façon sécurisée de sorte que les serveurs de gestion et de contrôle n'obtiennent respectivement aucune information sur la donnée biométrique acquise de l'entité ou sur les données biométriques de référence stockées dans le dispositif de stockage.

Pour cela, les opérations sur des entiers binaires pour la mise en oeuvre d'au moins ladite étape d'exécution du procédé, peuvent être traduites sous la forme d'au moins un circuit booléen, et ce circuit booléen peut ensuite être utilisé pour mettre en oeuvre au moins ladite étape d'exécution du procédé de manière sécurisée entre le serveur de contrôle et le serveur de gestion à l'aide d'un protocole de calcul sécurisé multipartite (« Secure Multi party Computation » ou (SMC)) tel que le protocole de Yao (Andrew Chi-Chih Yao, « How to generate and exchange secrets », Foundations of Computer Science, 1986., 27th Annual Symposium, pages 162-167. IEEE, 1986) ou le protocole GMW (O. Goldreich, S. Micali, and A. Wigderson, "How to play any mental game or a completeness theorem for protocols with honest majority", Symposium on Theory of Computing (STOC), pages 218-229. ACM, 1987).

L'étape d'exécution du procédé n'est pas la seule à pouvoir être mise en oeuvre de manière sécurisée à l'aide d'un tel protocole. Un tel protocole peut également être appliqué aux autres phases et étapes du procédé, notamment à la phase de calcul des données de distance. Ceci permet de partager les données de distance indexées entre le serveur de contrôle et le serveur de gestion de sorte qu'aucune desdites données de distance ne soit connue du serveur de gestion ou du serveur de contrôle.

Afin de traduire les étapes du procédé sous forme de circuit booléen, chaque opération réalisée sur les données de distance indexées, les marqueurs de données à traiter b et de minima c ou sur le bit de comparaison e doit être traduite sous forme de circuit logique.

Les paragraphes ci-dessous donnent à titre d'exemple non-limitatif un exemple de mise en oeuvre sécurisée à l'aide du protocole de Yao du procédé selon l'invention à partir de la donnée d'identité de l'entité à identifier x et des données d'identité de références $(y_1,...,y_n)$ obtenues à l'issue de la phase d'obtention P2. Les opérations sur des entiers binaires correspondant à la phase de calcul P3, à la phase de détermination P4 et à la phase d'identification P5 doivent alors être traduites sous la forme d'un circuit logique f, à évaluer de manière sécurisée par le protocole de Yao. Alternativement, un tel protocole pourrait être employé pour la mise en oeuvre d'un ensemble plus restreint de phases et d'étapes du procédé. Par exemple un tel protocole pourrait être appliqué uniquement à la mise en oeuvre des phases de calcul P3 et de détermination P4 à partir la donnée d'identité de l'entité à identifier x et des données d'identité de références $(y_1,...,y_n)$ obtenues à l'issue de la phase d'obtention P2. Selon un autre exemple un tel procédé pourrait être appliqué uniquement à la mise en oeuvre de la phase de détermination P4 et de la phase d'identification P5, à partir des données de distance $(d_1,...,d_n)$ calculées lors de la phase de calcul P3.

Le protocole de Yao peut donc être mis en oeuvre entre le serveur de gestion et le serveur de contrôle afin d'évaluer de manière sécurisée le circuit booléen f correspondant à la mise en oeuvre des phases de calcul P3, de détermination P4 et d'identification P5 du procédé.

Pour ce faire, un des deux serveurs, par exemple le serveur de gestion, crée un circuit confus correspondant au circuit f à évaluer ainsi que des paires de clés de chiffrement (une pour la valeur binaire 0 et une pour la valeur binaire 1) pour chacun des bits d'entrées du circuit f, c'est-à-dire pour chaque bit des données d'identité de référence et de la donnée d'identité de l'entité à identifier x. Le serveur de gestion génère également une paire de clés de chiffrement pour chaque sortie chaque porte non-XOR du circuit f. Le créateur du circuit confus génère enfin une table de concordance T entre les clés de chiffrement du résultat du circuit f et le résultat lui-même.

Une fois le circuit créé, le serveur de gestion envoie au serveur de contrôle la table de concordance T, la table sécurisée de chaque porte non XOR du circuit et ses propres entrées sécurisées du circuit : si par exemple, une donnée d'identité de référence a la valeur b sur un fil d'entrée $W_i$ du circuit alors le serveur de gestion envoie $w^b_i$.

Ainsi, pour chaque bit y d'entrée d'une donnée d'identité de référence égal à 0 (respectivement 1) en entrée du circuit, le créateur envoie uniquement la clé de chiffrement $k_0^y$ (resp. $k_1^y$ ). Comme ces clés sont aléatoires, le serveur de contrôle utilisateur du circuit confus n'obtient aucune information sur les bits correspondant des données d'identité de référence et donc aux données biométriques de référence détenues par le serveur de gestion.

En outre, le serveur de contrôle récupère auprès du serveur de gestion, par transfert inconscient, les clés correspondant aux bits des données d'entrée du circuit f qu'il possède, c'est-à-dire correspondant aux bits de la donnée d'identité x de l'entité à identifier.

Ainsi, pour chaque bit xi de la donnée d'identité x de l'entité à identifier, le serveur de gestion prépare une liste à deux éléments composée de $k_0^{xi}$ et $k_1^{xi}$ et l'index choisi par l'utilisateur pour le transfert inconscient est la valeur du bit xi.

Le recours à la méthode du transfert inconscient permet que le serveur gestion n'obtienne aucune information sur les valeurs des bits de la donnée d'identité x de l'entité à identifier.

Enfin, le serveur de contrôle peut évaluer le circuit confus à l'aide des clés qu'il a obtenues, et traduire le résultat qu'il obtient en sortie à l'aide de la table de concordance.

Un tel procédé permet ainsi d'identifier une entité à l'aide d'un protocole de sécurisation à base de circuits booléens pour un coût de calcul moindre, en minimisant le nombre de portes non-XOR et la profondeur du circuit booléen employé pour déterminer plusieurs distances minimales entre une donnée biométrique de l'individu acquise et des données biométriques de référence.

<u>ANNEXE</u>

| **Initialisation** | b = 111111, c=111111 et r = 6-4 = 2 |
|---|---|

**Etude du 6e bit (j=5)**

56 =111000 12 = 001100 44 = 101100 41 = 101001 26 = 011010 44 = 101100

P = 1+0+1+1+0+1 = 4 $\geq$ r

Donc d = 0 (r reste à 2)

Donc b = 101101 et c = 101101

**Etude du 5e bit (j=4)**

56 =111000 12 = 001100 44 = 101100 41 = 101001 26 = 011010 44 = 101100

P = 1+0+0+0 = 1 < r

Donc d = 0 et r = 2-1 = 1

Donc b = 001101 et c = 101101

**Etude du 4e bit (j=3)**

56 =111000 12 = 001100 44 = 101100 41 = 101001 26 = 011010 44 = 101100

P = 1+1+1 = 3 $\geq$ r

Donc d = 0 (r reste à 1)

Donc b = 001101 et c = 101101

**Etude du 3e bit (j=2)**

56 =111000 12 = 001100 44 = 101100 41 = 101001 26 = 011010 44 = 101100

P = 1+0+1 = 2 $\geq$ r

Donc d = 0 (r reste à 1)

Donc b = 001001 et c = 101001

**Etude du 2e bit (j=1)**

56 =111000 12 = 001100 44 = 101100 41 = 101001 26 = 011010 44 = 101100

P = 0+0 = 0 < r

Donc d = 1 et r = 1-0 = 1

Donc b = 001001 et c = 101001

**Etude du 1er bit (j=0)**

56 =111000 12 = 001100 44 = 101100 41 = 101001 26 = 011010 44 = 101100

P = 0+0 = 0 < r

Donc d = 1 et r = 1-0 = 1

Donc b = 001001 et c = 101001

**Finalisation pour obtenir exactement 4 minima :** c = 101000

Les 2e, 4e, 5e, et 6e entiers sont les 4 minima de la liste

**Revendications**

**1.** Procédé d'identification d'une entité,

mis en oeuvre par un système d'identification comprenant un serveur de gestion susceptible d'être relié à un dispositif de stockage stockant des données biométriques de référence indexées $(Y_1,..., Y_n)$ correspondant à des entités de référence et un serveur de contrôle susceptible d'acquérir une donnée biométrique de l'entité à identifier (X), ledit serveur de gestion et ledit serveur de contrôle étant susceptibles d'être reliés entre eux,

à partir de données de distance indexées $(d_1,...,d_n)$, lesdites données de distances indexées étant des distances calculées à partir des données biométriques de référence indexées stockées et de la donnée biométrique de l'entité à identifier acquise, lesdites données de distance indexées étant partagées entre ledit serveur de contrôle et ledit serveur de gestion de sorte qu'aucune desdites données de distance ne soit connue du serveur de gestion ou du serveur de contrôle,

lesdites données de distance indexées étant des entiers binaires de longueur q',

ledit procédé d'identification comprenant :

- une **phase de détermination** (P4) d'un ensemble (I) d'indices de minima $(index_1, ..., index_k)$,

ledit ensemble (I) d'indices de minima comprenant au plus un nombre prédéterminé (k) d'indices de données de distance minimales parmi lesdites données de distance indexées,

ladite phase de détermination comprenant :

• préalablement, **une étape d'initialisation** (E41) lors de laquelle

◦ une liste de données à traiter est déterminée, ladite liste de données à traiter comprenant lesdites données de distance indexées,

◦ un nombre restant de données de distance indexées à écarter (r) est déterminé, ledit nombre restant de données de distance indexées à écarter étant égal à la différence entre le nombre de données de distance indexées (n) et le nombre prédéterminé d'indices (k),

• **une étape d'exécution** (E42) comprenant,

pour chaque ensemble des $j^{ème}$ bits, dits bits courants, des données de distance indexées comprises dans ladite liste de données à traiter, dites données à traiter, j étant un entier variant de q'-1 à 0,

la mise en oeuvre des étapes suivantes,

en commençant par l'ensemble des bits de poids fort des données à traiter et en terminant par l'ensemble des bits de poids faible des données à traiter :

◦ **comparaison** (E421) d'un nombre d'indices d'un premier groupe d'indices de données de distance indexées (p) au nombre restant de données indexées à écarter (r),

ledit premier groupe d'indices comprenant les indices des données de distance indexées parmi ladite liste de données à traiter pour lesquelles ledit bit courant est égal à 1,

◦ **recherche** (E422) d'indices de minima comprenant :

▪ si le nombre d'indices du premier groupe (p) est inférieur au nombre restant de données indexées à écarter (r) :

❖ retrait, de ladite liste de données à traiter, des données dont les indices appartiennent au premier groupe et,

❖ détermination d'un nouveau nombre restant de données indexées à écarter (r) en soustrayant du nombre restant de données indexées à écarter (r) le nombre d'indices du premier groupe (p) ;

▪ sinon :

❖ retrait, de ladite liste de données à traiter, des données de distance indexées dont les indices font partie d'un deuxième groupe d'indices de données de distance indexées,

ledit deuxième groupe comprenant les indices des données de distance indexées parmi ladite liste de données à traiter pour lesquelles ledit bit courant est égal à 0, et

❖ ajout desdits indices du deuxième groupe à l'ensemble d'indices de minima;

- **une phase d'identification** (P5) de l'entité à identifier parmi les entités de référence correspondant aux données biométriques de références stockées associées aux indices de données de distance minimales

(index$_1$, ...index$_k$) déterminés lors de la phase de détermination,

les opérations sur des entiers binaires pour la mise en oeuvre d'au moins ladite étape d'exécution dudit procédé d'identification, étant traduites sous la forme d'au moins un circuit booléen, ledit circuit booléen étant ensuite utilisé pour mettre en oeuvre au moins ladite étape d'exécution dudit procédé, cette mise en oeuvre étant réalisée de manière sécurisée entre le serveur de contrôle et le serveur de gestion à l'aide d'un protocole de calcul sécurisé multipartite (« Secure Multi party Computation » ou (SMC)) permettant une évaluation sécurisée dudit circuit booléen, ledit procédé d'identification étant **caractérisé en ce que** :

- l'appartenance des données de distance indexées à ladite liste de données à traiter est mémorisée sous la forme d'un marqueur de données à traiter, ledit marqueur de données à traiter étant un entier binaire (b) de longueur égale au nombre de données de distance indexées (n) et la valeur du i$^{ème}$ bit dudit marqueur indiquant l'appartenance ou non de la i$^{ème}$ donnée de distance indexée à ladite liste de données à traiter,
- l'appartenance des indices des données de distance indexées à l'ensemble d'indices de minima (I) est mémorisée sous la forme d'un marqueur de minima, ledit marqueur de minima étant un entier binaire (c) de longueur égale au nombre de données de distance indexées (n), la valeur du i$^{ème}$ bit dudit marqueur indiquant l'appartenance ou non de l'indice i à l'ensemble d'indices de minima,
- le nombre de données de distance indexées $d_1$, ..., $d_n$ étant égal à n :

- l'étape d'initialisation (E41) comprend en outre l'initialisation de tous les bits du marqueur de données à traiter b et du marqueur de minima c à la valeur 1,
- l'étape de comparaison (E421) comprend des étapes de :

• détermination du nombre (p) d'indices du premier groupe en comptant le nombre d'éléments égaux à la valeur 1 parmi l'ensemble ($d_1$ $^j$ AND $b_1$, ..., $d_n$ $^j$ AND $b_n$), la notation $d_i$ $^j$ représentant la valeur du j$^{ème}$ bit de la donnée de distance indexée d'indice i,
• si le nombre (p) d'indices du premier groupe est inférieur au nombre restant de données indexées à écarter (r), fixation d'un bit de comparaison e à la valeur 1,
• sinon, fixation dudit bit de comparaison e à la valeur 0,

- l'étape de recherche (E422) est mise en oeuvre en réalisant :

• la mise à jour du nombre restant de données indexées à écarter r, le nombre restant de données indexées à écarter r étant remplacé par la valeur [((r-p) XOR r) AND e] XOR r,
• la mise à jour de chaque bit du marqueur de minima c, chaque i$^{ème}$ bit $c_i$ du marqueur de minima c étant remplacé par la valeur [($d_i^j$ OR e) OR ($b_i$ XOR 1)] AND $c_i$,
• la mise à jour de chaque bit du marqueur de données à traiter b, chaque i$^{ème}$ bit $b_i$ du marqueur de données à traiter b étant remplacé par la valeur (e XOR $d_i^j$) AND $b_i$.

2. Procédé d'identification selon la revendication précédente dans lequel la phase d'identification (P5) comprend une détermination d'au moins une donnée biométrique de référence similaire à la donnée biométrique acquise de l'entité à identifier, parmi les données biométriques de références stockées associées aux indices de données de distance minimales (index$_1$, ...index$_k$) déterminés lors de la phase de détermination.

3. Procédé d'identification selon l'une des revendications précédentes comprenant, à l'issue de la phase de détermination, si le nombre d'indices de l'ensemble d'indices de minima déterminé est inférieur au nombre prédéterminé (k) d'indices de données de distance minimales, une **étape de complétion** (E43) au cours de laquelle des indices de données de distance indexées appartenant à la liste de données à traiter sont ajoutés à l'ensemble d'indices de minima, de sorte que ledit ensemble comprenne un nombre d'indices égal au nombre prédéterminé (k) d'indices de données de distance minimales.

4. Procédé d'identification selon la revendication précédente dans lequel ladite étape de complétion (E43) comprend successivement pour chaque indice i des données de distance indexées :

- si le nombre restant de données indexées à écarter (r) est supérieur à zéro, la détermination d'une nouvelle valeur du nombre restant de données indexées à écarter en soustrayant le i$^{ème}$ bit $b_i$ du marqueur de données à traiter b du nombre restant de données indexées à écarter, et la mise à zéro de la valeur du i$^{ème}$ bit b $_i$ du marqueur de données à traiter b,

- la mise à jour du $i^{ème}$ bit $c_i$ du marqueur de minima c par la valeur $c_i = c_i$ AND ($b_i$ XOR 1).

5. Procédé d'identification selon l'une quelconque des revendications précédentes, dans lequel lesdites données biométriques de référence sont des entiers binaires,
et comprenant préalablement :

- **une phase d'acquisition** (P1) par le serveur de contrôle de la donnée biométrique (X) de l'entité à identifier,
- **une phase d'obtention** (P2) d'une donnée d'identité de l'entité à identifier (x) et de données d'identité de références ($y_1$, ..., $y_n$), à partir respectivement de la donnée biométrique acquise (X) et des données biométriques de référence indexées ($Y_1$, ..., $Y_n$),

de sorte que ladite donnée d'identité de l'entité à identifier (x) et les données d'identité de références ($y_1$,..., $y_n$) soient des entiers binaires de moindre taille que celle desdites données biométriques,
les indices des données d'identité de référence étant associés aux indices des données biométriques de référence,

- **une phase de calcul** (P3) des données de distance ($d_1$, ..., $d_n$) comprenant pour chaque donnée d'identité de référence ($y_i$) le calcul sécurisé d'une distance entre la donnée d'identité de l'entité à identifier (x) et ladite donnée d'identité de référence ($y_i$) ;

6. Procédé d'identification selon l'une des revendications 2 à 5, dans lequel la phase d'identification comprend en outre des étapes de :

- **calcul** (E51), pour chaque donnée biométrique de référence ($Y_i$) dont l'indice est associé à un indice de l'ensemble de minima déterminé (I), d'un taux de similarité entre la donnée biométrique acquise de l'entité à identifier (X) et ladite donnée biométrique de référence ($Y_i$) ;
- **détermination** (E52) d'au moins une donnée biométrique de référence dont le taux de similarité dépasse un seuil prédéterminé ;
- **identification** (E53) de l'entité à identifier à partir des données biométriques de référence déterminées.

7. Procédé d'identification selon la revendication précédente dans lequel :

- le calcul d'un taux de similarité entre la donnée biométrique acquise de l'entité à identifier (X) et ladite donnée biométrique de référence ($Y_i$) comprend le calcul d'une distance entre la donnée biométrique acquise de l'entité à identifier et ladite donnée biométrique de référence ;
- ladite au moins une donnée biométrique de référence déterminée est ladite au moins une donnée biométrique de référence pour laquelle la distance calculée est inférieure à un seuil prédéterminé.

8. Procédé d'identification selon l'une des revendications précédentes, dans lequel le protocole de calcul sécurisé multipartite (Secure Multi party Computation (SMC)) est le protocole de Yao ou le protocole GMW.

9. Produit programme d'ordinateur comprenant des instructions de code pour l'exécution d'un procédé selon l'une quelconque des revendications précédentes lorsque ce programme est exécuté par un processeur.

10. Système d'identification d'une entité comprenant un serveur de gestion susceptible d'être relié à un dispositif de stockage stockant des données biométriques de référence indexées ($Y_1$,..., $Y_n$) correspondant à des entités de référence et un serveur de contrôle susceptible d'acquérir une donnée biométrique de l'entité à identifier (X), ledit serveur de gestion et ledit serveur de contrôle étant susceptibles d'être reliés entre eux et partageant des données de distance indexées ($d_1$,...,$d_n$), de sorte qu'aucune desdites données de distance ne soit connue du serveur de gestion ou du serveur de contrôle, lesdites données de distances indexées étant des distances calculées à partir des données biométriques de référence indexées stockées et de la donnée biométrique de l'entité à identifier acquise, **caractérisé en ce que** :

ledit serveur de contrôle et ledit serveur de gestion comprennent un processeur configuré pour mettre en oeuvre les phases et étapes d'un procédé d'identification selon l'une quelconque des revendications 1 à 8.

**Patentansprüche**

1. Identifikationsverfahren einer Entität,
das von einem Identifikationssystem umgesetzt wird, das einen Verwaltungsserver umfasst, der mit einer Speichervorrichtung verbunden werden kann, die indizierte biometrische Referenzdaten ($Y_1$, ..., $Y_n$) speichert, die Referenzentitäten entsprechen, und einen Steuerserver, der eine biometrische Information der zu identifizierenden Entität (X) erfassen kann, wobei der Verwaltungsserver und der Steuerserver miteinander verbunden werden können, ausgehend von indexierten Distanzdaten ($d_1$, ..., $d_n$), wobei die indexierten Distanzdaten Distanzen sind, die ausgehend von den gespeicherten indexierten, biometrischen Referenzdaten und der erfassten biometrischen Information der zu identifizierenden Entität berechnet werden, die indexierten Distanzdaten zwischen dem Steuerserver und dem Verwaltungsserver derart geteilt werden, dass dem Verwaltungsserver oder dem Steuerserver keine der Distanzdaten bekannt ist,
wobei die indexierten Distanzdaten binäre Ganzzahlen mit der Länge q' sind,
wobei das Identifikationsverfahren Folgendes umfasst:

- eine **Bestimmungsphase** (P4) einer Einheit (I) von Minimaindices ($index_1$, ..., $index_k$),
wobei die Einheit (I) von Minimaindices maximal eine vorbestimmte Anzahl (k) von Indices von Mindestdistanzdaten unter den indexierten Distanzdaten umfassen,
wobei die Bestimmungsphase Folgendes umfasst:

• vorab einen **Initialisierungsschritt** (E41), bei dem

◦ eine Liste zu verarbeitender Daten bestimmt wird, wobei die Liste zu verarbeitender Daten die indexierten Distanzdaten umfasst,
◦ eine restliche Anzahl indexierter zu verwerfender Distanzdaten (r) bestimmt wird, wobei die restliche Anzahl indexierter zu verwerfender Distanzdaten gleich dem Unterschied zwischen der Anzahl indexierter Distanzdaten (n) und der vorbestimmten Anzahl von Indices (k) ist,

• einen **Ausführungsschritt** (E42), umfassend
für jede Einheit der j-ten Bits, aktuelle Bits genannt, der indexierten Distanzdaten, die in der Liste zu verarbeitender Daten enthalten sind, zu verarbeitende Daten genannt, wobei j eine Ganzzahl von q'-1 bis 0 ist, das Umsetzen der folgenden Schritte,
beginnend durch die Einheit der höchstwertigen Bits der zu verarbeitenden Daten und endend durch die Einheit der niederwertigsten Bits der zu verarbeitenden Daten:

◦ **Vergleich** (E421) einer Anzahl von Indices einer ersten Gruppe von Indices indexierter Distanzdaten (p) mit der restlichen Anzahl indexierter zu verwerfender Daten (r),
wobei die erste Gruppe von Indices die Indices der indexierten Distanzdaten aus der Liste zu verarbeitenden Daten, für die das aktuelle Bit gleich 1 ist, umfasst,
° **Suche** (E422) nach Minimaindices, umfassend:

♦ falls die Anzahl von Indices der ersten Gruppe (p) kleiner ist als die restliche Anzahl indexierter zu verwerfender Daten (r):
✦ Entfernen aus der Liste zu verarbeitender Daten der Daten, deren Indices zu der ersten Gruppe gehören, und
✦ Bestimmen einer neuen Anzahl restlicher indexierter zu verwerfender Daten (r), indem von der restlichen Anzahl indexierter zu verwerfender Daten (r) die Anzahl von Indices der ersten Gruppe (p) subtrahiert wird;

♦ anderenfalls:
✦ Entfernen aus der Liste zu verarbeitenden Daten der indexierten Distanzdaten, deren Indices zu einer zweiten Gruppe von Indices indexierter Distanzdaten gehören,
wobei die zweite Gruppe die Indices der indexierten Distanzdaten aus der Liste zu verarbeitender Daten, für die das aktuelle Bit gleich 0 ist, umfasst, und
✦ Hinzufügen der Indices der zweiten Gruppe zu der Einheit von Minimaindices;

- eine **Identifikationsphase** (P5) der zu identifizierenden Entität unter den Referenzentitäten, die den gespeicherten biometrischen Referenzdaten entsprechen, die mit den Indices von Mindestdistanzdaten ($index_1$, ..., $index_k$), die bei der Bestimmungsphase bestimmt werden, assoziiert sind,

wobei Operationen auf binären Ganzzahlen zum Umsetzen mindestens des Ausführungsschritts des Identifikationsverfahrens in Form von mindestens einem Booleschen Kreislauf übersetzt werden, wobei der Boolesche Kreislauf anschließend verwendet wird, um mindestens den Ausführungsschritt des Verfahrens umzusetzen, wobei diese Umsetzung gesichert zwischen dem Steuerserver und dem Verwaltungsserver mit Hilfe eines gesicherten Multipartei-Rechenprotokoll ("Secure Multi Party Computation" oder (SMC)), das eine gesicherte Bewertung des Booleschen Kreislaufs erlaubt, ausgeführt wird,

wobei das Identifikationsverfahren **dadurch gekennzeichnet ist, dass**:

- die Zugehörigkeit der indexierten Distanzdaten zu der Liste zu verarbeitender Daten in Form eines Markers zu verarbeitender Daten gespeichert wird, wobei der Marker zu verarbeitender Daten eine binäre Ganzzahl (b) mit Länge gleich der Anzahl indexierter Distanzdaten (n) ist, und der Wert des i-ten Bits des Markers die Zugehörigkeit oder nicht der i-ten indexierten Distanzinformation zu der Liste zu verarbeitender Daten angibt,

- die Zugehörigkeit der Indices der indexierten Distanzdaten zu der Einheit von Minimaindices (I) in Form eines Minimamarkers gespeichert wird, wobei der Minimamarker eine binäre Ganzzahl (c) mit Länge gleich der Anzahl indexierter Distanzdaten (n) ist, der Wert des i-ten Bits des Markers die Zugehörigkeit oder nicht des Index i zu der Einheit von Minimaindices angibt,

- die Anzahl indexierter Distanzdaten $d_1$, ..., $d_n$ gleich n ist:

> - der Initialisierungsschritt (E41) außerdem die Initialisierung aller Bits des Markers zu verarbeitender Daten b und des Minimamarkers c auf den Wert 1 umfasst,
> - der Vergleichsschritt (E421) folgende Schritte umfasst:

>> • Bestimmen der Anzahl (p) von Indices der ersten Gruppe unter Zählen der Anzahl von Elementen, die in der Einheit gleich dem Wert 1 sind ($d_1^{\,j}$ AND $b_1$, ..., $d_n^{\,j}$ AND $b_n$), wobei die Notation $d_i^{\,j}$ den Wert des j-ten Bits der indexierten Distanzinformation mit dem Index i darstellt,
>> • falls die Anzahl (p) von Indices der ersten Gruppe kleiner ist als die restliche Anzahl indexierter zu verwerfender Daten (r), Festlegen eines Vergleichsbits e auf den Wert 1,
>> • anderenfalls Festlegen des Vergleichsbits e auf den Wert 0,

> - der Suchschritt (E422) umgesetzt wird durch Ausführen:

>> • der Aktualisierung der restlichen Anzahl indexierter zu verwerfender Daten r, wobei die restliche Anzahl indexierter zu verwerfender Daten r durch den Wert [((r-p) XOR r) AND e] XOR r ersetzt wird,
>> • der Aktualisierung jedes Bits des Minimamarkers c, wobei jedes i-te Bit $c_i$ des Minimamarkers c durch den Wert [($d_i^{\,j}$ OR e) OR ($b_i$ XOR 1)] AND $c_i$ ersetzt wird,
>> • der Aktualisierung jedes Bits des Markers zu verarbeitender Daten b, wobei jedes i-te Bit $b_i$ des Markers zu verarbeitender Daten b durch den Wert (e XOR $d_i^{\,j}$) AND $b_i$ ersetzt wird.

2. Identifikationsverfahren nach dem vorhergehenden Anspruch, wobei die Identifikationsphase (P5) ein Bestimmen mindestens einer biometrischen Referenzinformation umfasst, die der erfassten biometrischen Information der zu identifizierenden Entität ähnlich ist, unter den gespeicherten biometrischen Referenzdaten, die mit den Indices von Mindestdistanzdaten ($index_1$, ..., $index_k$) assoziiert sind, die bei der Bestimmungsphase bestimmt werden.

3. Identifikationsverfahren nach einem der vorhergehenden Ansprüche, das nach der Bestimmungsphase, falls die Anzahl von Indices der bestimmten Einheit von Minimaindices kleiner ist als die vorbestimmte (k) Anzahl von Indices von Mindestdistanzdaten, einen **Ergänzungsschritt** (E43) umfasst, bei dem die indexierten Indices von Distanzdaten, die zu der Liste zu verarbeitender Daten gehören, zu der Einheit von Minimaindices hinzugefügt werden, so dass die Einheit eine Anzahl von Indices gleich der vorbestimmten Anzahl (k) von Indices von Mindestdistanzdaten umfasst.

4. Identifikationsverfahren nach dem vorhergehenden Anspruch, wobei der Ergänzungsschritt (E43) nacheinander für jeden Index i der indexierten Distanzdaten Folgendes umfasst:

> - falls die restliche Anzahl indexierter zu verwerfender Daten (r) größer ist als null, Bestimmen eines neuen Werts der restlichen Anzahl indexierter zu verwerfender Daten durch Subtrahieren des i-ten Bits $b_i$ des Markers zu verarbeitender Daten b von der restlichen Anzahl indexierter zu verwerfender Daten und Rückstellen auf null des Werts des i-ten Bits $b_i$ des Markers zu verarbeitender Daten b,

- die Aktualisierung des i-ten Bits $c_i$ des Minimamarkers c durch den Wert $c_i = c_i$ AND ($b_i$ XOR 1).

5. Identifikationsverfahren nach einem der vorhergehenden Ansprüche, wobei die biometrischen Referenzdaten binäre Ganzzahlen sind,
und vorab umfassend:

- **eine Erfassungsphase** (P1) durch den Steuerserver der biometrischen Information (X) der zu identifizierenden Entität,
- **eine Erzielungsphase** (P2) einer Identitätsinformation der zu identifizierenden Entität (x) und von Referenzidentitätsdaten ($y_1$, ..., $y_n$), jeweils ausgehend von der erfassten biometrischen Information (X) und den indexierten biometrischen Referenzdaten ($Y_1$, ..., $Y_n$),
so dass die Identitätsinformation der zu identifizierenden Entität (x) und die Referenzidentitätsdaten ($y_1$, ..., $y_n$) binäre Ganzzahlen mit kleinerer Größe als die der biometrischen Daten sind,
wobei die Indices der Referenzidentitätsdaten mit den Indices der biometrischen Referenzdaten assoziiert sind,
- **eine Berechnungsphase** (P3) der Distanzdaten ($d_1$, ..., $d_n$), die für jede Referenzidentitätsinformation ($y_i$) die gesicherte Berechnung einer Distanz zwischen der Identitätsinformation der zu identifizierenden Entität (x) und der Referenzidentitätsinformation ($y_i$) umfasst.

6. Identifikationsverfahren nach einem der Ansprüche 2 bis 5, wobei die Identifikationsphase außerdem folgende Schritte umfasst:

- **Berechnung** (E51) für jede biometrische Referenzinformation ($Y_i$), deren Index mit einem Index der bestimmten Einheit von Minima (I) assoziiert ist, einer Ähnlichkeitsrate zwischen der erfassten biometrischen Information der zu identifizierenden Entität (X) und der biometrischen Referenzinformation ($Y_i$) ;
- **Bestimmen** (E52) mindestens einer biometrischen Referenzinformation, deren Ähnlichkeitsrate einen vorbestimmten Schwellenwert überschreitet;
- **Identifikation** (E53) der zu identifizierenden Entität ausgehend von den bestimmten biometrischen Referenzdaten.

7. Identifikationsverfahren nach dem vorhergehenden Anspruch, wobei:

- die Berechnung einer Ähnlichkeitsrate zwischen der erfassten biometrischen Information der zu identifizierenden Entität (X) und der biometrischen Referenzinformation ($Y_i$) das Berechnen einer Distanz zwischen der erfassten biometrischen Information der zu identifizierenden Entität und der biometrischen Referenzinformationen umfasst;
- die mindestens eine bestimmte biometrische Referenzinformation die mindestens eine biometrische Referenzinformation ist, für die die berechnete Distanz kleiner ist als ein vorbestimmter Schwellenwert.

8. Identifikationsverfahren nach einem der vorhergehenden Ansprüche, bei dem das gesicherte Multipartei-Rechenprotokoll (Secure Multi Party Computation (SMC)) das Yao-Protokoll oder das GMW-Protokoll ist.

9. Computerprogrammprodukt, das Codeanweisungen zur Ausführung eines Verfahrens nach einem der vorhergehenden Ansprüche umfasst, wenn dieses Programm von einem Prozessor ausgeführt wird.

10. Identifikationssystem einer Entität, das einen Verwaltungsserver umfasst, der mit einer Speichervorrichtung verbunden werden kann, die indexierte biometrische Referenzdaten ($Y_1$, ..., $Y_n$), die Referenzentitäten entsprechen, speichert, und einen Steuerserver, der eine biometrische Information der zu identifizierenden Entität (X) erfassen kann, wobei der Verwaltungsserver und der Steuerserver miteinander verbunden werden können und indexierte Distanzdaten ($d_1$, ..., $d_n$) derart teilen, dass dem Verwaltungsserver oder dem Steuerserver keine der Distanzdaten bekannt ist, wobei die indexierten Distanzdaten Distanzen sind, die ausgehend von gespeicherten indexierten biometrischen Referenzdaten und der erfassten biometrischen Information der zu identifizierenden Entität berechnet werden, **dadurch gekennzeichnet, dass**:

der Steuerserver und der Verwaltungsserver einen Prozessor umfassen, der konfiguriert ist, um die Phasen und Schritte eines Identifikationsverfahrens nach einem der Ansprüche 1 bis 8 umzusetzen.

**Claims**

1. An identification method of an entity,
   executed by an identification system comprising a management server which can be connected to a storage device storing indexed reference biometric data ($Y_1,..., Y_n$) corresponding to reference entities and a control server which can acquire a biometric datum of the entity to be identified (X), said management server and said control server being able to be connected together,
   from indexed distance data ($d_1,..., d_n$), said indexed distance data being distances calculated from the stored indexed reference biometric data and the acquired biometric datum of the entity to be identified, said indexed distance data being shared between said control server and said management server such that none of said distance data is known to the management server or the control server,
   said indexed distance data being binary integers of length q',
   said identification method comprising:

   - a **determination phase** (P4) of a set (I) of indices of minima ($index_1$, ..., $index_k$),
   said set (I) of indices of minima comprising at most a predetermined number (k) of indices of minimal distance data from said indexed distance data,
   said determination phase comprising:

     • previously, an **initialisation step** (E41) during which:

       ∘ a list of data to be processed is determined, said list of data to be processed comprising said indexed distance data,
       ∘ a remaining number of indexed distance data to be set aside (r) is determined, said remaining number of indexed distance data to be set aside being equal to the difference between the number of indexed distance data (n) and the predetermined number of indices (k),

     • an **execution step** (E42) comprising
     for each set of $j^{th}$ bits, so-called current bits, of indexed distance data comprised in said list of data to be processed, so-called data to be processed, j being an integer varying from q'-1 to 0,
     performing the following steps,
     starting by the set of most significant bits of the data to be processed and finishing by the set of least significant bits of the data to be processed:

       ∘ **comparison** (E421) of a number of indices of a first group of indices of indexed distance data (p) to the remaining number of indexed data to be set aside (r),
       said first group of indices comprising the indices of the indexed distance data from said list of data to be processed for which said current bit is equal to 1,
       ∘ **search** (E422) of indices of minima comprising:

         ♦ if the number of indices of the first group (p) is less than the remaining number of indexed data to be set aside (r):
           ✦ removal, from said list of data to be processed, of data whereof the indices belong to the first group and
           ✦ determination of a new remaining number of indexed data to be set aside (r) by subtracting from the remaining number of indexed data to be set aside (r) the number of indices of the first group (p);

         ♦ else:
           ✦ removal, from said list of data to be processed, of indexed distance data whereof the indices form part of a second group of indices of indexed distance data,
           said second group comprising the indices of the indexed distance data from said list of data to be processed for which said current bit is equal to 0, and
           ✦ addition of said indices of the second group to the set of indices of minima;

   - an **identification phase** (P5) of the entity to be identified from the reference entities corresponding to the stored reference biometric data associated with the indices of minimal distance data ($index_1$, ...$index_k$) deter-

mined during the determination phase,

the operations on binary integers for implementing at least said execution step of said identification method, being translated in the form of at least one Boolean circuit, said Boolean circuit being then used to execute at least said execution step of said method, this execution being carried out securely between the control server and the management server by means of a secure multi party computation protocol (SMC) for secure evaluation of said Boolean circuit,

said identification method being **characterised in that**:

- belonging of the indexed distance data to said list of data to be processed is stored in the form of a marker of data to be processed, said marker of data to be processed being a binary integer (b) of length equal to the number of indexed distance data (n) and the value of the $i^{th}$ bit of said marker indicating belonging or not of the $i^{th}$ indexed distance datum to said list of data to be processed,
- belonging of indices of indexed distance data to the set of indices of minima (I) is stored in the form of a minima marker, said minima marker being a binary integer (c) of length equal to the number of indexed distance data (n), the value of the $i^{th}$ bit of said marker indicating belonging or not of the index i to the set of indices of minima,
- the number of indexed distance data $d_1$, ..., $d_n$ being equal to n:

  - the initialisation step (E41) further comprises initialisation of all the bits of the marker of data to be processed b and of the minima marker c at the value 1,
  - the comparison step (E421) comprises steps of:

    • determination of the number (p) of indices of the first group by counting the number of elements equal to the value 1 from the set ($d_1^j$ AND $b_1$, ..., $d_n^j$ AND $b_n$), the notation $d_i^j$ representing the value of the $j^{th}$ bit of the indexed index distance datum i,
    • if the number (p) of indices of the first group is less than the remaining number of indexed data to be set aside (r), setting of a comparison bit e at the value 1,
    • else, setting of said comparison bit e at the value 0,

- the search step (E422) is conducted by:

  • updating of the remaining number of indexed data to be set aside r, the remaining number of indexed data to be set aside r being replaced by the value [((r-p) XOR r) AND e] XOR r,
  • updating of each bit of the minima marker c, each $i^{th}$ bit $c_i$ of the minima marker c being replaced by the value [($d_i^j$ OR e) OR ($b_i$ XOR 1)] AND $c_i$,
  • updating of each bit of the marker of data to be processed b, each $i^{th}$ bit $b_i$ of the marker of data to be processed b being replaced by the value (e XOR $d_i^j$) AND $b_i$.

2. The identification method according to the preceding claim wherein the identification phase (P5) comprises determination of at least one reference biometric datum similar to the acquired biometric datum of the entity to be identified, from the stored reference biometric data associated with the indices of minimal distance data ($index_1$, ...$index_k$) determined during the determination phase.

3. The identification method according to one of the preceding claims comprising, on completion of the determination phase, if the number of indices of the set of indices of minima determined is less than the predetermined number (k) of indices of minimal distance data, a **completion step** (E43) during which indices of indexed distance data belonging to the list of data to be processed are added to the set of indices of minima, such that said set comprises a number of indices equal to the predetermined number (k) of indices of minimal distance data.

4. The identification method according to the preceding claim wherein said completion step (E43) successively comprises for each index I of the indexed distance data:

   - if the remaining number of indexed data to be set aside (r) is greater than zero, the determination of a new value of the remaining number of indexed data to be set aside by subtracting the $i^{th}$ bit $b_i$ of the marker of data to be processed b from the remaining number of indexed data to be set aside, and resetting to zero of the value of the $i^{th}$ bit $b_i$ of the marker of data to be processed b,
   - updating of the $i^{th}$ bit $c_i$ of the minima marker c by the value.

5. The identification method according to any one of the preceding claims, wherein said reference biometric data are binary integers,
and comprising previously:

- **an acquisition phase** (P1) by the control server of the biometric datum (X) of the entity to be identified,
- **an obtaining phase** (P2) of an identity datum of the entity to be identified (x) and reference identity data $(y_1, ..., y_n)$, from respectively the acquired biometric datum (X) and the indexed reference biometric data $(Y_1, ..., Y_n)$,
such that said identity datum of the entity to be identified (x) and the reference identity data $(y_1,..., y_n)$ are binary integers of lesser size than that of said biometric data,
the indices of the reference identity data being associated with the indices of the reference biometric data,
- **a calculation phase** (P3) of the distance data $(d_1, ..., d_n)$ comprising for each reference identity datum $(y_i)$ the secure calculation of a distance between the identity datum of the entity to be identified (x) and said reference identity datum $(y_i)$.

6. The identification method according to any one of claims 2 to 5, wherein the identification phase further comprises steps of:

- **calculation** (E51), for each reference biometric datum $(Y_i)$ whereof the index is associated with an index of the determined set of minima (I), of a degree of similarity between the acquired biometric datum of the entity to be identified (X) and said reference biometric datum $(Y_i)$
- **determination** (E52) of at least one reference biometric datum whereof the degree of similarity exceeds a predetermined threshold;
- **identification** (E53) of the entity to be identified from the determined reference biometric data.

7. The identification method according to the preceding claim wherein:

- the calculation of a degree of similarity between the acquired biometric datum of the entity to be identified (X) and said reference biometric datum $(Y_i)$ comprises the calculation of a distance between the acquired biometric datum of the entity to be identified and said reference biometric datum;
- said at least one determined reference biometric datum is said at least one reference biometric datum for which the distance calculated is less than a predetermined threshold.

8. The identification method according to any one of the preceding claims, wherein the secure multi party computation protocol (SMC) is the Yao protocol or the GMW protocol.

9. A computer program product comprising code instructions for execution of a method according to any one of the preceding claims when this program is executed by a processor.

10. An identification system of an entity comprising a management server which can be connected to a storage device storing indexed reference biometric data $(Y_1,..., Y_n)$ corresponding to reference entities and a control server which can acquire a biometric datum of the entity to be identified (X), said management server and said control server being able to be connected together and sharing indexed distance data $(d_1,...,d_n)$, such that none of said distance data is known to the management server or the control server, said indexed distance data being distances calculated from the stored indexed reference biometric data and the acquired biometric datum of the entity to be identified, **characterised in that**:

said control server and said management server comprise a processor configured to execute the phases and steps of an identification method according to any one of claims 1 to 8.

FIG. 1

| P1 | Acquisition donnée biométrique X de l'entité |
|---|---|

| P2 | Obtention données d'identité de l'entité x et de référence $(y_1, ..., y_n)$ |
|---|---|

| P3 | Calcul de données de distance $(d_1, ..., d_n)$ |
|---|---|

| P4 | détermination d'un ensemble d'indices de minima $(index_1, , index_k)$ |
|---|---|
| E41 | Initialisation |
| E42 | Exécution |
| E421 | Comparaison |
| E422 | Recherche |
| E43 | Complétion |

| P5 | Identification |
|---|---|
| E51 | Calcul de taux de similarité |
| E52 | Détermination donnée biométrique de référence |
| E53 | Identification |

# FIG. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013092916 A

**Littérature non-brevet citée dans la description**

- How to play any mental game or a completeness theorem for protocols with honest majority. **O. GOLDREICH ; S. MICALI ; A. WIGDERSON.** Symposium on Theory of Computing (STOC). ACM, 1987, 218-229
- How to generate and exchange secrets. **ANDREW CHI-CHIH YAO.** Foundations of Computer Science, 1986, 27th Annual Symposium. IEEE, 1986, 162-167
- Improved garbled circuit: Free XOR gates and applications. **KOLESNIKOV, V. ; SCHNEIDER, T.** International Colloquium on Automata, Languages and Programming (ICALP'08). Springer, 2008, vol. 5126, 486-498
- How to generate and exchange secrets. **ANDREW CHI-CHIH YAO.** Foundations of Computer Science, 1986., 27th Annual Symposium. IEEE, 1986, 162-167